Europäisches Patentamt

European Patent Office

Office européen des brevets

(11) Publication number: **0 008 935**
A1

# EUROPEAN PATENT APPLICATION

(21) Application number: 79301802.9

(22) Date of filing: 31.08.79

(51) Int. Cl.³: **F 16 L 21/02**
**E 04 D 13/06**

(30) Priority: 06.09.78 GB 3578178

(43) Date of publication of application:
19.03.80 Bulletin 80/6

(84) Designated Contracting States:
AT BE CH DE FR IT LU NL SE

(71) Applicant: MARLEY TILE A.G.
9 Poststrasse
Zug(CH)

(72) Inventor: Eastick, David Michael
c/o Marley Extrusions Limited
Lenham Maidstone, Kent(GB)

(74) Representative: Butler, Michael John
FRANK B. DEHN & CO. Imperial House, 15-19 Kingsway
London, WC2B 6UZ(GB)

(54) Sockets for pipes or gutters.

(57) A socket (1) for a pipe or gutter (2) comprises a moulded thermoplastics socket member (1) adapted to receive a pipe or gutter (2) and having a groove for retaining a seal (4) which seals the pipe or gutter (2) to the socket (1). In order to facilitate moulding, the groove is partly defined by a retaining member (3) which makes a snap fit with the socket member (1) by means of slots (6) formed through one of the members (1,3) engageable with projections (5) formed on the other of the members (1,3).

FIG.1.

EP 0 008 935 A1

## Sockets for Pipes or Gutters

This invention relates to sockets of thermoplastic material which are adapted to receive pipes or gutters and which are provided with a seal for sealing the or each pipe or gutter thereto. In such sockets it has been customary to provide a groove in the socket for retaining an O-ring or sealing strip. However, if such a groove is provided with walls perpendicular to the axis of the socket, it will then only be possible to mould the socket by the use of collapsible cores. The use of collapsible cores suffers from the disadvantage that it increases the capital cost of the mould for use with such cores and also, owing to the complexity of the mould, increases the down time for maintenance and the maintenance costs of the mould. In order to avoid using collapsible cores, such grooves may be produced by a machining step subsequent to the moulding step. It will, however, be appreciated that the use of a machining step will again involve undesirable expense as compared with a simple injection moulding process.

Another expedient which may be used is to make the groove with sides which are oblique to the axis of the socket.

The moulded socket can then be stripped off the core after the mould halves have been separated. However, such a groove is incapable of positively retaining a seal such as an O-ring or flexible strip in place in the socket.

It is an object of the present invention to overcome these disadvantages by providing a socket for a pipe or gutter which can be readily moulded without the use of collapsible cores and which without any subsequent machining operation can be provided with means for positively retaining a seal such as an O-ring or flexible strip in position.

According to the invention, there is provided a socket for a pipe or gutter comprising a moulded thermoplastic socket member adapted to receive a pipe or gutter and a retaining member which makes a snap fit with said socket member by means of slots formed through one of said members engageable with projections formed on the other of said members, said retaining member and socket member defining between them a groove for positively retaining a seal member for producing a seal between the socket and the pipe or gutter.

In one preferred arrangement, the projections comprise a plurality of wedge-shaped nibs on the retaining member which are received in slots in the socket member. Alternatively, the nibs may be provided on the socket member and the slots in the retaining member.

By virtue of the present invention, it is possible to produce not only grooves having walls perpendicular to the axis of the socket, but also grooves having undercut walls so as more securely to retain a seal member shaped so as to fit the undercut. Such a seal will be less likely to be dragged down the socket when a pipe or gutter is inserted therein.

In a preferred embodiment of a pipe socket, the retaining member is in the form of a retaining ring which fits entirely within an enlarged end portion of the pipe socket. However, in a gutter socket, it is desirable for the retaining member to have a portion extending around the outside of the socket member.

In the accompanying drawings:

Figure 1 is a cross-section on line I-I of Figure 2 through a first embodiment of a pipe socket according to the invention;

Figure 2 is a plan view of the embodiment of Figure 1;

Figure 3 is a cross-section on line III-III of Figure 4 through a second embodiment of a pipe socket according to the invention;

Figure 4 is a plan view of the embodiment of Figure 3;

Figure 5 is an end view of a first embodiment of a gutter socket according to the invention;

Figure 6 is a partial cross-section through the embodiment of Figure 5; and

Figure 7 is a cross-section corresponding to Figure 6 of a second embodiment of a gutter socket according to the invention.

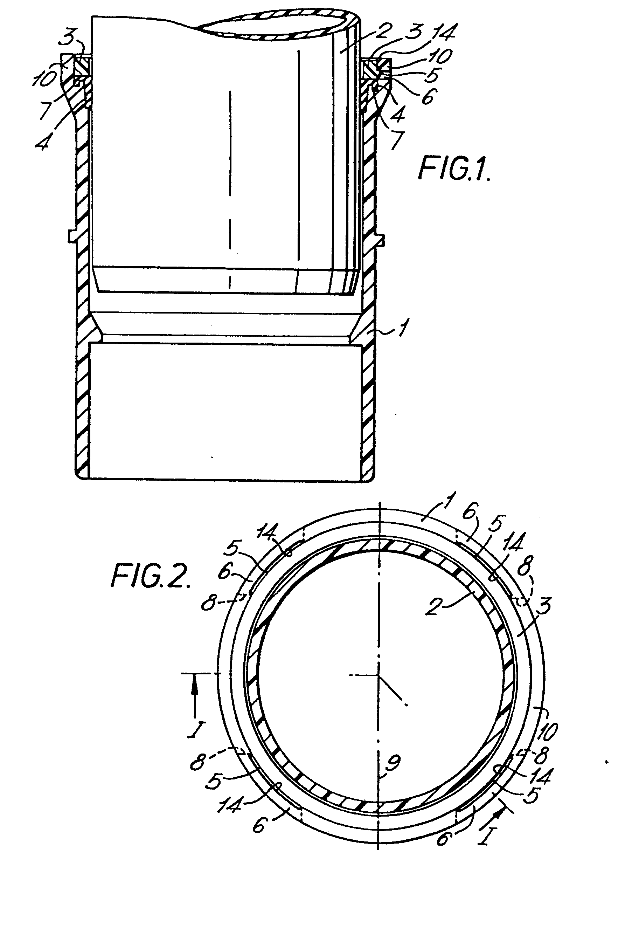

As shown in Figures 1 and 2, a pipe socket comprises a socket member 1 adapted to receive a pipe 2, a retaining member in the form of a ring 3 and a seal 4. The ring 3 is provided with four projecting wedge-shaped nibs 5, each of which makes a snap fit in a slot 6 in the wall of the socket member 1. The slots 6 are arranged in an end portion 10 of the member 1 having an increased inside diameter, so that when the ring is snapped into place, the ring 3 and the socket member 1 together define a groove in which the seal 4 is positively retained. The groove includes a re-entrant portion 7 in which a portion of the seal 4 is received, whereby the seal is prevented from being dragged out of its groove when the pipe 2 is inserted in the pipe socket.

- 4 -

The slots 6 are formed with walls 8 which are angled with respect to the radial direction so as to enable the socket member 1 to be formed in a two-part mould having a split line 9, the mould parts being drawn apart perpendicularly to the line 9 in the direction of arrows A-A. Chambers 14 are provided at locations corresponding to the slots 6 for location of the nibs 5 before they are snapped into slots 16.

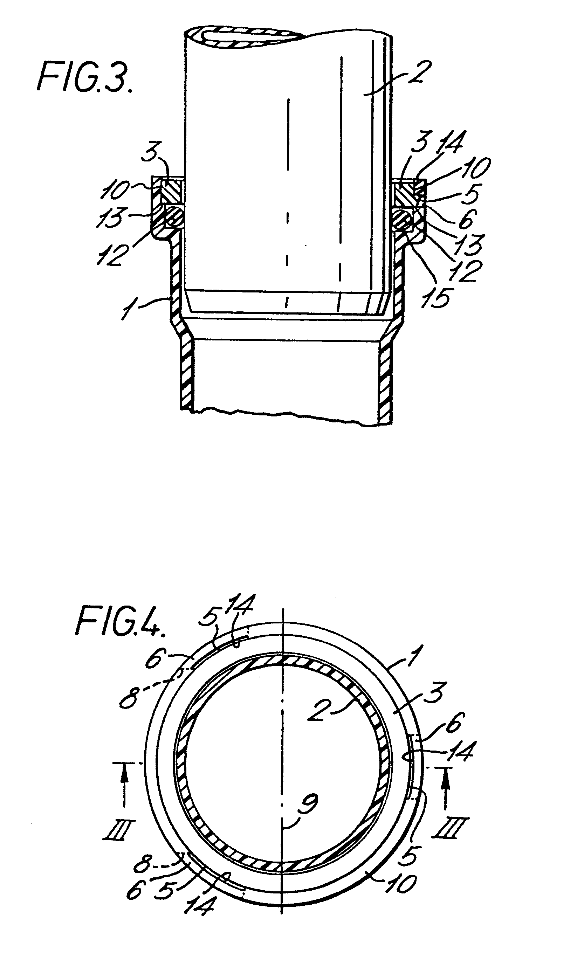

Figures 3 and 4 show an embodiment similar to that of Figures 1 and 2, but utilising a conventional O-ring seal 12. The enlarged portion 10 of the socket member 1 is provided with a ledge 13 passing therearound on which the ring 3 rests when the three nibs 5 are snapped into the slots 6. This ensures that the O-ring is not compressed between the ring 3 and the ledge 15. As in the first embodiment the socket member may be formed in a two part mould, separable along line 9 in the direction of arrows A-A.

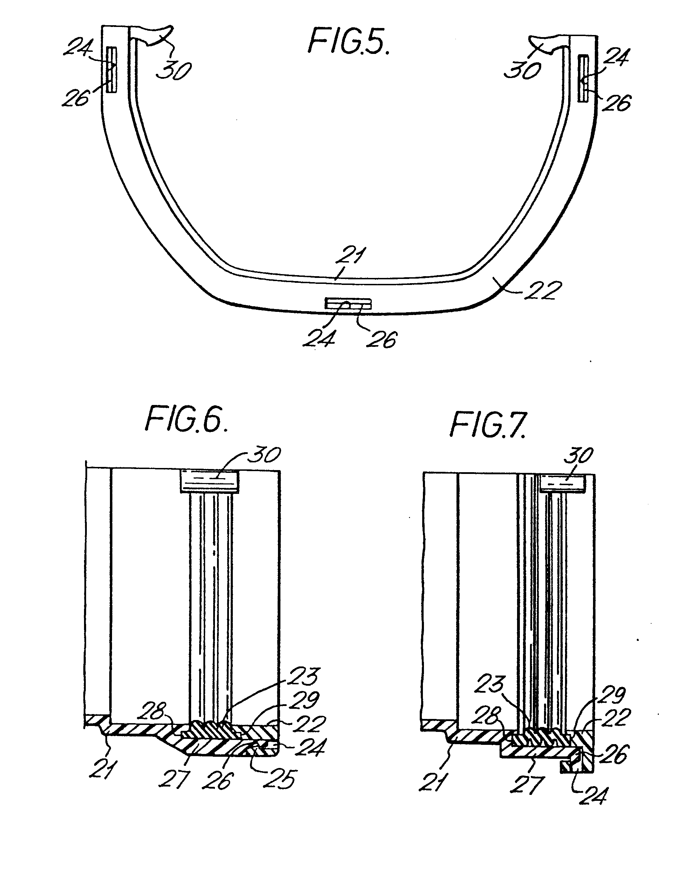

Figures 5 and 6 show a gutter socket comprising a gutter socket member 21 adapted to receive a gutter (not shown), a retaining member 22 and a seal 23. The retaining member 22 is provided with three slots 24 therein, each slot terminating in a tapered nib 25. The socket member 21 is also provided with three tapered nibs 26 on the end face thereof, each such nib 26 entering a slot 24 and engaging a corresponding nib 25. The socket member 21 is provided with an end portion 27 of increased inside dimensions and the socket member 21 and the remaining member 22 are provided with an undercut ledge 28, 29 respectively. In this manner, when the retaining member is snap fitted on the socket member, a seal retaining groove is formed in which the seal 23 is positively retained.

When a gutter is inserted in the socket, it is held in place by members 30, and the seal 23 forms a watertight seal around the outside of the gutter.

The embodiment shown in Figure 7 differs from that of Figures 5 and 6 in that the slots 24 in the retaining member are provided around the outside therof, rather than in the end. This arrangement avoids the necessity of providing a tapered nib on the retaining member 22. Instead, the tapered nibs 26 are provided around the outside of the socket member 21 and snap into place in the slots 24 when the member 22 is fitted into place. The embodiment is otherwise functionally similar to that of Figures 5 and 6.

It will be appreciated by those skilled in the art that the socket member can be a member provided with two sockets for connecting together two lengths of pipe or guttering, an end cap for a pipe or gutter, or can form any other type of junction between one or more pipes or gutters and other fixtures.

The invention thus provides, at least in its preferred embodiments, a socket for a pipe or gutter made of a thermoplastics material which, by use of a retaining member for the seal, is not only readily moulded in an injection moulding process, but also facilitates the insertion of a seal therein whilst positively retaining the seal after insertion.

CLAIMS:

1.  A socket for a pipe or gutter comprising a moulded thermoplastics socket member adapted to receive a pipe or gutter, and a retaining member which makes a snap fit with said socket member by means of slots formed through one of said members engageable with projections formed on the other of said members, said retaining member and said socket member defining between them a groove for positively retaining a seal member for producing a seal between the socket and the pipe or gutter.

2.  A socket as claimed in claim 1, wherein said projections comprise a plurality of wedge-shaped nibs.

3.  A socket as claimed in claim 1 or 2, wherein said projections engage said slots in a plane perpendicular to the axis of the socket.

4.  A socket as claimed in any preceding claim, wherein said groove has at least one undercut wall formed in said retaining member and/or said socket member, and the seal member is shaped so that a portion thereof enters said undercut.

5.  A socket for a pipe as claimed in any preceding claim, wherein the retaining member is a retaining ring which fits within an end portion of the socket member having a greater diameter than the portion of the socket member adapted to receive a pipe.

6.  A socket as claimed in claim 5, wherein said retaining ring has a plurality of radially extending projections around the periphery thereof and said slots are provided in said end portion.

7.    A socket for a gutter as claimed in any of claims 1 to 4, wherein said projections project from the end face of the socket member and said slots are formed axially in the retaining member and have a projection therein to engage the projections on the socket member.

8.    A socket for a gutter as claimed in any of claims 1 to 4, wherein said projections project from the periphery of said socket member and the slots are provided in a portion of the retaining member which extends around the outside of said socket member.

1/3

FIG.1.

FIG.2.

FIG.3.

FIG.4.

FIG.5.

FIG.6.

FIG.7.

European Patent Office

**EUROPEAN SEARCH REPORT**

EP 79 301 802.9

| Category | DOCUMENTS CONSIDERED TO BE RELEVANT<br>Citation of document with indication, where appropriate, of relevant passages | Relevant to claim |
|---|---|---|
| | DE - A1 - 2 548 581 (DAIMLER-BENZ)<br>* fig. 1, 2 *<br>-- | 1-3,<br>5,6 |
| | DE - U - 1 762 324 (TORFIT-WERKE)<br>* fig. 3 *<br>-- | 1 |
| P | US - A - 4 112 979 (D.G. WIDDICOMBE)<br>* fig. 1, 4, 6 *<br>-- | 1,2,<br>5,6 |
| | US - A - 3 963 268 (D.G. WIDDICOMBE)<br>* fig. 1 to 10 *<br>-- | 1,2,<br>5,6 |
| A | GB - A - 1 304 526 (TAC CONSTRUCTION)<br>* complete document *<br>-- | |
| A | US - A - 3 827 734 (K. BROWN)<br>* complete document *<br>-- | |
| A | GB - A - 1 286 818 (PLASTIERS LIMITED)<br>* complete document *<br>-- | |
| A | GB - A - 1138 881 (OSMA PLASTICS LTD)<br>* complete document *<br>-- | |
| A | GB - A - 1 026 542 (G.W. GIBLING)<br>* complete document *<br>-- | |
| A | DE - U - 1 870 648 (H. KELLER)<br>* complete document *<br>---- | |

**CLASSIFICATION OF THE APPLICATION (Int. Cl.3)**

F 16 L 21/02
E 04 D 13/06

**TECHNICAL FIELDS SEARCHED (Int.Cl.3)**

E 04 D 13/00
F 16 L 21/00
F 16 L 37/00
F 16 L 47/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

X | The present search report has been drawn up for all claims

| Place of search | Date of completion of the search | Examiner |
|---|---|---|
| Berlin | 30-10-1979 | SCHLABBACH |

EPO Form 1503.1   06.78